# EUROPÄISCHE PATENTSCHRIFT

(11) **EP 3 094 704 B1**
(45) Veröffentlichungstag und Bekanntmachung des Hinweises auf die Patenterteilung: **16.10.2019**
(21) Anmeldenummer: 15702641.0
(22) Anmeldetag: 13.01.2015
(51) Int. Cl.: C10B 53/02, C10C 5/00, C10K 3/02, B01J 21/18

(54) **VERFAHREN ZUR HERSTELLUNG VON PYROLYSEGAS ODER PYROLYSEÖL AUS BIOGENEN AUSGANGSMATERIALIEN**
METHOD FOR PRODUCING PYROLYSIS GAS OR PYROLYSIS OIL FROM BIOGENIC STARTING MATERIALS
PROCÉDÉ DE PRODUCTION DE GAZ PYROLYTIQUE OU D'HUILE PYROLYTIQUE À PARTIR DE MATÉRIAUX DE DÉPART BIOGÈNES

(30) Priorität: 13.01.2014 DE 102014100277
(43) Veröffentlichungstag der Anmeldung: 23.11.2016
(73) Patentinhaber: Fraunhofer-Gesellschaft zur Förderung der angewandten Forschung e.V., 80686 München (DE)
(72) Erfinder: SCHULZKE, Tim, Oberhausen 46147 (DE); HEIL, Volker, Oberhausen 46145 (DE)
(86) Internationale Anmeldenummer: PCT/EP2015/050514
(87) Internationale Veröffentlichungsnummer: WO 2015/104430

(56) Entgegenhaltungen:
- WO-A1-2011/053704
- CN-A- 102 634 355
- Kazuhisa Murata: "Effect of Metal-modified Carbon Catalysts on Fast Pyrolysis of Jatropha Waste", Journal of the Japan Petroleum Institute, 1. Januar 2013 (2013-01-01), Seiten 371-380, XP055175109, Gefunden im Internet: URL:https://www.jstage.jst.go.jp/article/j pi/56/6/56_371/_pdf [gefunden am 2015-03-10] in der Anmeldung erwähnt
- GILBERT P ET AL: "Tar reduction in pyrolysis vapours from biomass over a hot char bed", BIORESOURCE TECHNOLOGY, ELSEVIER BV, GB, Bd. 100, Nr. 23, 1. Dezember 2009 (2009-12-01), Seiten 6045-6051, XP026469520, ISSN: 0960-8524, DOI: 10.1016/J.BIORTECH.2009.06.041 [gefunden am 2009-07-14] in der Anmeldung erwähnt
- J. L. YE ET AL: "Co-pyrolysis of Polypropylene and Biomass", ENERGY SOURCES, PART A: RECOVERY, UTILIZATION, AND ENVIRONMENTAL EFFECTS, Bd. 30, Nr. 18, 29. Juli 2008 (2008-07-29) , Seiten 1689-1697, XP055175287, ISSN: 1556-7036, DOI: 10.1080/15567030701268419
- Bayerbach, R.: "Die ablative Flashpyrolyse der PyTec - erste Erfahrungen und Produkteigenschaften", Gülzower Fachgespräche - Biocrudeoil; Fachagentur für Nachwachsende Rohstoffe e.V., 1. Januar 2008 (2008-01-01), Seiten 87-97, XP055175165, Gefunden im Internet: URL:http://www.pytecsite.com/download.php? what=7 [gefunden am 2015-03-10]
- LOPEZ F A ET AL: "Textural and fuel characteristics of the chars produced by the pyrolysis of waste wood, and the properties of activated carbons prepared from them", JOURNAL OF ANALYTICAL AND APPLIED PYROLYSIS NOVEMBER 2013 ELSEVIER NLD, vol. 104, November 2013 (2013-11), pages 551-558, DOI: 10.1016/J.JAAP.2013.05.014

## Beschreibung

Die Anmeldung betrifft die Herstellung von gasmotorgeeignetem Gasprodukt, motorgeeignetem Gas und Öl sowie entsäuertem Pyrolyseöl aus lignozellulösen Biomassen und Reststoffen.

Die flüssigen und gasförmigen Produkte technischer Pyrolyseverfahren, insbesondere der Schnellpyrolyse, besitzen für viele Anwendungen einen zu hohen Sauerstoffgehalt in den Molekülen. Eine Desoxygenierung sollte erfolgen, bevor die Kondensation der kondensierbaren Bestandteile beginnt, da diese immer mit irreversiblen Polymerisationen einhergeht, die eine nachträgliche Behandlung erschweren oder unmöglich machen.

Bekannt ist die Behandlung der Pyrolysedämpfe mit nicht rein kohlenstoffbasierten Katalysatoren oder die Pyrolyse in Gegenwart dieser Katalysatoren zur Desoxygenierung der Pyrolyseprodukte.

Als Stand der Technik ist die WO 9410107 A1 zu nennen. Sie beschreibt die Behandlung von Schnellpyrolysedämpfen mit zeolithischen Katalysatoren. Dabei entstehen in der Gasphase vor allem ungesättigte Kohlenwasserstoffe. Dies deckt sich mit den eigenen Erfahrungen aus dem katalytischen Cracken von Fettsäureestern.

Auch der Einsatz von Holzkohle zur Katalyse von Pyrolysedämpfen wird in der Literatur beschrieben (Gilbert et al. (2009), Bioresource Technology 100 (23), S. 6045-6051). Im Gegensatz zu Aktivkohle ist Holzkohle jedoch nicht mikroporös, so dass die zu erwartenden Effekte der Decarboxylierung und Decarbonylierung nur sehr begrenzt auftreten können.

Zinkoxid ist ebenfalls als Katalysator bekannt, beeinflusst aber in erster Linie die wässrige Phase bei zweiphasigen Pyrolyseflüssigprodukten und ist daher im Regelfall uninteressant.

Bekannt ist weiterhin die Pyrolyse in Gegenwart kohlenstoffbasierter Katalysatoren (Murata et al. Journal of the Japan Petroleum Institute 56, Issue 6, 2013, S. 371-380).

Schließlich ist bekannt, dass die Zerstörung von Teeren im Pyrolysedampf über Aktivkohle auch ohne Wasserdampf deutlich oberhalb der Pyrolysetemperatur bei Temperaturen oberhalb von 700 °C, erfolgen kann. (N. Striügas et al., Catalysis Today 196 (2012) 67-74)

Ye et al. Energy Sources, Part A: Recovery, Utilization, and Environmental Effects, 30 (2008), S. 1689-1697 offenbart Aktivkohle als Katalysator zur Behandlung von Pyrolysegasen. CN-A-102634355 offenbart ein Verfahren zum katalytischen Spalten von Pyrolyseteeren, wobei der Katalysator Carbon Nanotubes umfasst.

Der vorliegende Erfindung liegt die Aufgabe zugrunde, mit kostengünstigen und wenig vergiftungsanfälligen Katalysatoren das Entsäuern (CO-, CO₂-Abtrennung) und die Kettenverkürzung des Primärdampfes von Pyrolyseverfahren, insbesondere der Schnellpyrolyse, zur Umsetzung von Biomassen zu erreichen. Weitere Aufgaben sind, die Säurezahl der Pyrolyseprodukte, insbesondere der Pyrolysekondensate zu reduzieren und dabei möglichst wenig ungesättigte Kohlenwasserstoffverbindungen zu erzeugen, die Ausbeute möglichst gesättigter Kohlenwasserstoffe zu erhöhen, die Ausbeute an Pyrolyseprodukten zu erhöhen, die für den Betrieb von stationären Maschinen, Gasmotoren und Turbinen zur Stromerzeugung geeignet sind und den Heizwert der Pyrolyseprodukte zu erhöhen.

Zumindest eine der vorgenannten Aufgaben wird durch den Gegenstand der unabhängigen Ansprüche gelöst. Unteransprüche, die Beschreibung und die Zeichnungen lehren vorteilhafte Weiterbildungen.

Erfindungsgemäß wird ein Verfahren vorgeschlagen, bei dem die Pyrolyse, insbesondere die Pyrolyse von Biomassen so durchgeführt wird, dass die Pyrolysedämpfe vor der Kondensation mit einem meso- und/oder mikroporösen, insbesondere einem mikroporösen Katalysator in Kontakt gebracht werden, wobei der Katalysator kohlenstoffbasiert ist. Unter einem mikroporösen Katalysator wird hierbei ein Katalysator mit einem signifikanten Anteil an Mikroporen verstanden. Entsprechendes gilt für einen mesoporösen Katalysator. Hierbei wird für die genannten Poren die IUPAC-Definition zugrunde gelegt: unter Mirkoporen werden Poren mit einem Porendurchmesser bis zu 2,0 nm und unter Mesoporen Poren mit einem Porendurchmesser von 2 - 50 nm verstanden (vergleiche Everett, D. H.: Manual of Symbols and Terminology for Physicochemical Quantities and Units, Appendix II: Definitions, Terminology and Symbols in Colloid and Surface Chemistry. In: Pure Appl. Chem. 31 (4), S. 577-638).

Das anmeldungsgemäße Verfahren erfolgt unter Verwendung von zumindest zwei Reaktoren, einem Pyrolysereaktor, in dem der Pyrolyseschritt B) erfolgt und einem Desoxygenierungsreaktor, dem die in Schritt B) erhaltenen gasförmigen und kondensierbaren Pyrolyseprodukte zugeführt werden und in dem die katalytische Behandlung der Pyrolyseprodukte in einem Desoxygenierungsschritt C) erfolgt.

Das anmeldungsgemäß vorgeschlagene Verfahren führt zum Entsäuern (CO-, CO₂-Abtrennung) und zur Kettenverkürzung der Kohlenwasserstoffe im Primärdampf, womit die vorstehend genannten Ziele mindestens teilweise erreicht werden.

Mögliche Verfahrensprodukte und ihre technische Bedeutung sind gasmotorgeeignete Gasprodukte für die Anwendung in Blockheizkraftwerken, motorgeeignete Pyrolysegase und Pyrolyseöle zur direkten Befeuerung eines Blockheizkraftwerkes, entsäuerte Pyrolyseöle zur thermischen Nutzung (Kraft-Wärme-Kopplung) ohne Einsatz hochkorrosionsfester Gebinde und Reaktoren sowie entsäuerte und weiter aufgewertete Pyrolyseöle zur stofflichen Nutzung durch Abtrennung von Wertstoffkomponenten Als biogene Ausgangsmaterialien werden lignozellulöse Biomassen und lignozellulöse Reststoffe eingesetzt. Hierbei kommen für das erfindungsgemäße Verfahren insbesondere holzartige Biomassen infrage. Als holzartige Biomasse wiederum zu nennen: Waldrestholz, Altholz gemäß der deutschen Altholzverordnung (beispielsweise der Kategorien A I, A II, A III oder A IV), Stroh (beispielsweise Getreidestroh, Maisstroh, Rapsstroh, Zuckerrohrstroh), Holz aus Kurzumtriebsplantagen, Straßenbegleitgrün, Landschaftspflegematerial, Treibsel aus der Gewässerpflege und feste Gärreste (beispielsweise aus Biogasanlagen). Prinzipiell sind neben Waldrestholz und Altholz auch jegliche anderen Hölzer als Ausgangsmaterial geeignet.

Bei dem kohlenstoffbasierten Katalysator kann es sich insbesondere um eine Aktivkohle, einen Aktivkoks, Carbon Nanotubes oder ein Kohlenstoffmolekularsieb handeln.

Der kohlenstoffbasierte Katalysator weist einen Kohlenstoff-Gehalt (fixer Kohlenstoff nach DIN 51720) von zumindest 60 Gew.-%, üblicherweise auch zumindest 80 Gew.-% und in vielen Fällen auch von zumindest 95 Gew.-% auf. Er kann auch vollständig aus Kohlenstoff bestehen. Gemäß einer Ausführungsform kann der kohlenstoffbasierte Katalysator aber auch eine Dotierung und/oder Imprägnierung mit einem Dotierstoff aufweisen. Unter Dotierung wird hierbei verstanden, dass der Dotierstoff dem porösen Katalysator während dessen Herstellung zugesetzt wird, so dass im fertigen porösen Katalysator eine homogene Verteilung des Dotierstoffs vorliegt. Dagegen erfolgt bei der Imprägnierung eine Behandlung des bereits fertigen porösen Katalysators mit einem Material, das den Dotierstoff enthält oder hieraus besteht, so dass der Dotierstoff nur auf der Oberfläche des Katalysators vorhanden ist. Bezüglich des Herstellungsverfahrens derartiger Katalysatoren mit einem Dotierstoff sowie möglicher Dotierstoffe sei auf die WO 2007/137856 A2 verwiesen.

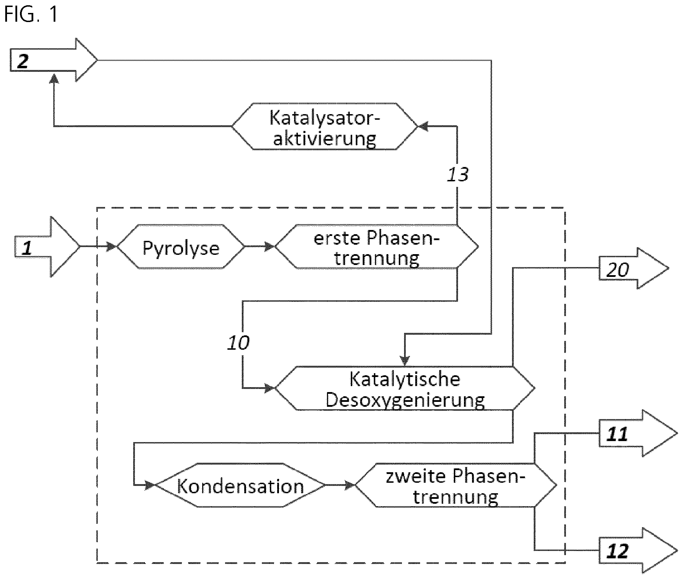

Der kohlenstoffbasierte Katalysator kann ganz oder teilweise aus dem im Prozess erzeugten Pyrolysekoks hergestellt werden. Figur 1 zeigt eine Ausführungsform des erfindungsgemäßen Verfahrens mit Katalysatorgewinnung, wobei der mit dem Verfahren erzeugte Pyrolysekoks als Ausgangsmaterial eingesetzt wird. Der Pyrolysekoks kann dabei als Kohlenstoffquelle für ein beliebiges Verfahren zur Herstellung von Aktivkohlen, Aktivkoksen, Carbon Nanotubes oder Kohlenstoffmolekularsieben verwendet werden. Beispielsweise kann er direkt oder nach Vermahlung als »kohlenstoffhaltiges Material« zur Herstellung von Formaktivkohle nach dem in DE 100 03 660 A1 beschriebenen Verfahren verwendet oder aber direkt durch chemische Aktivierung oder Gasaktivierung/Dampfaktivierung, insbesondere mit Wasserdampf, CO₂, O₂ oder Luft als Aktivierungsmittel in Aktivkohle umgewandelt werden. Die chemische Aktivierung oder Dampfaktivierung erfolgt dabei gemäß Kienle et al., Aktivkohle und ihre industrielle Anwendung: 4.3; Chemische Aktivierung; 4.4 Gasaktivierung, Enke, Stuttgart, 1980. Die Umwandlung von Koks aus der Holzpyrolyse in Aktivkohlen durch Gasaktivierung mit CO₂ kann mit dem Verfahren von Lopez et al. erfolgen (F. López et al., Journal of Analytical and Applied Pyrolysis 104 (2013) 551 -558).

Die Kontaktierung kann zwischen Pyrolyse und Kondensation in einem beliebigen Gas-Feststoff-Reaktor, beispielsweise in einem Festbettreaktor, einem Wanderbettreaktor, einem Fließbettreaktor, einem Wirbelschichtreaktor, einem Hordenreaktor oder einem Drehrohrreaktor - analog zum katalytischen Cracken biobasierter Fette und Öle nach EP 1 489 157 A1 - erfolgen.

Die Pyrolyse gemäß Schritt B) erfolgt unter Sauerstoffausschluss innerhalb weniger Sekunden und im Regelfall bei einer Temperatur T₁ von 450 bis 600 °C, vorzugsweise 500 bis 550 °C. Die Desoxygenierung gemäß Schritt C) erfolgt ebenfalls unter Sauerstoffausschluss und bei einer Temperatur T₂, die kleiner ist als T₁.

Die Desoxygenierung wird bei einer Temperatur T₂ zwischen 350 und 500 °C, vorzugsweise bei 420 bis 480 °C und insbesondere bei Temperaturen von 450 bis 470 °C durchgeführt. Die Differenz zwischen den Temperaturen T₁ und T₂ in den Verfahrensschritten B) und C) beträgt zumindest 10 °C, häufig zumindest 20° C und insbesondere zumindest 30 ° mit T₂ < T₁.

Die katalytische Desoxygenierung erfolgt bei Absolutdrücken zwischen 20 mbar und 200 bar, bevorzugt zwischen 200 mbar und 80 bar, besonders bevorzugt zwischen 700 mbar und 1300 mbar (d.h. Umgebungsdruck mit definiertem leichtem Über-oder Unterdruck).

Gemäß einer Ausführungsform erfolgt das anmeldungemäße Verfahren unter Zugabe von Wasser (inbesondere als Wasserdampf) oder Wasserstoff in den Reaktionsraum der katalytischen Desoxygenierung, analog zum katalytischen Cracken biobasierter Fette und Öle in Gegenwart von Wasser und/oder einem Wasser freisetzenden Material nach EP 1 724 325 A1.

Gemäß einer weiteren Ausführungsform kann ein Inertgas, beispielsweise Stickstoff, als Trägergas eingesetzt werden.

Gemäß einer weiteren Ausführungsform findet die katalytische Desoxygenierung bei dem Druck statt, der auch im Pyrolysereaktor vorherrscht (abzüglich dem strömungstechnisch bedingten Druckverlust zwischen Pyrolysereaktor und Ausgang der katalytischen Desoxygenierung). Eine Druckerhöhung zur Überwindung von Druckverlusten kann zwischen Pyrolysereaktor und dem Reaktor zur katalytischen Desoxygenierung eingebracht werden. Bevorzugt handelt es sich dabei um einen Verdichter oder eine Strahlpumpe, welche bevorzugt mit Inertgas, Wasserdampf oder Wasserstoff betrieben wird. Die Druckerhöhung beträgt bevorzugt bis zu 500 mbar, besonders bevorzugt bis zu 200 mbar. Die Druckerhöhung kann alternativ an einer beliebigen Stelle zwischen katalytischer Desoxygenierung und abschließender Phasentrennung angeordnet sein.

Gemäß einer weiteren Ausführungsform erfolgt das anmeldungsgemäße Verfahren im Zusammenspiel mit einer Schnellpyrolyse oder einem Pyrolyseverfahren mit ähnlichen oder kürzeren Kontaktzeiten. Die Aufenthaltszeit der Pyrolysedämpfe im Pyrolysereaktor beträgt dann im Regelfall unter zwei Sekunden. Generell wird anmeldungsgemäß unter einer Pyrolyse eine Reaktion unter Ausschluss von Sauerstoff und bei den vorstehend genannten Temperaturen verstanden, bei der ein hoher Anteil kondensierbarer Pyrolyseprodukte entsteht. Im Regelfall beträgt dieser Anteil zumindest 30 Gew.-% bezogen auf das eingesetzte Ausgangsmaterial, häufig zumindest 40 Gew.-% und oft auch zumindest 50 Gew.-%.

Gemäß einer weiteren Ausführungsform wird ein Katalysator mit einer spezifischen kumulativen Oberfläche der Mikroporen nach DIN 66 135-4 und der nachfolgend angegebenen Methode von Horvath und Kawazoe von zumindest 900 m²/g, bevorzugt zumindest 1000 m²/g und insbesondere zumindest 1300 m²/g eingesetzt. Dies gilt unabhängig voneinander insbesondere auch für kohlenstoffbasierte Katalysatoren mit einem wie oben definierten Kohlenstoff-Gehalt von zumindest 60 Gew.-%, zumindest 80 Gew.-%, zumindest 95 Gew.-% oder 100 Gew.-%. Anmeldungsgemäß hat sich gezeigt, dass insbesondere die Mikroporen wesentlich sind für das erhaltene Produktspektrum. Ohne hierauf beschränkt werden zu wollen wird davon ausgegangen, dass bei einem frischen Katalysator insbesondere die kleinen Mikroporen für die Desoxygenierung maßgeblich sind, dass der Anteil dieser Mikroporen aber mit fortschreitender Desoxygenierungsreaktion abnimmt. Wird der nicht mehr frische Katalysator nun weiter zur Desoxygenierung eingesetzt, so werden große Mikroporen und kleine Mesoporen für das erhaltene Produktspektrum wesentlich. Die Desoxygenierungswirkung nimmt zwar ab; allerdings führen die verbliebenen Mikro- und Mesoporen zur vermehrten Bildung von organischen Pyrolyseölen, die eine geringere Dichte als Wasser aufweisen und auf gebildeter wässriger Phase aufschwimmen. Diese nachfolgend mit "leichte organische Phase" bezeichnete Komponente ist besonders geeignet für den Einsatz als Kraftstoff für stationäre Maschinen und leichter handhabbar als die daneben gebildeten organischen Pyrolyseölen, die eine höhere Dichte als Wasser aufweisen auf denen wiederum die wässrige Phase aufschwimmt (nachfolgend mit "schwere organische Phase" bezeichnet). Die schwere organische Phase ist im Wesentlichen als Ersatz für schweres Heizöl oder als nahezu schwefelfreier Schiffsdiesel geeignet.

Abschließend ist festzustellen, dass im Unterschied zum erfindungsgemäßen Verfahren die eingangs genannte Literatur von Murata et al. zwar einen katalytischen Prozess offenbart, der auf ähnliche Produkte wie die vorliegende Erfindung abstellt; der wesentliche Unterschied ist jedoch, dass in Murata et al. der Katalysator im Regelfall direkt mit der Biomasse vermischt wird (somit also bereits die Pyrolyse selbst katalytisch beeinflusst) und nur für einige wenige Versuche die Pyrolysedämpfe durch den im Pyrolyse-Reaktor vorgelegten Katalysator strömen. Bei der vorliegenden Erfindung werden die in der primären Pyrolyse entstandenen Dämpfe in einer separaten Reaktoranordnung katalytisch behandelt. Allgemeiner ausgedrückt kann erfindungsgemäß die katalytische Behandlung der Pyrolyse-Dämpfe bei einer frei wählbaren anderen Temperatur als der des Pyrolyseprozesses erfolgen. Es ist also die Einstellung von unterschiedlichen Temperaturen in Pyrolyse und nachgeschalteter Decarboxylierung möglich, was wesentlich für den Erfolg des Verfahrens ist. Weitere erfindungsgemäße Verfahrensvorteile sind: Abtrennung von staubförmigen Partikeln zwischen Pyrolyse und Decarboxylierung (dadurch kein Anstieg des Druckverlusts im Katalysatorfestbett mit der Betriebsdauer) und die Möglichkeit, weitere chemisch aktive Substanzen den Pyrolysedämpfen zuzumischen, die dann in der Decarboxylierungsstufe die Produktausbeute/-qualität verbessern.

Erfindungsgemäß wurde auch erkannt, dass die erfindungsgemäß nach Schritt C) erhaltenen flüssigen Pyrolyseprodukte und die gasförmigen Pyrolyseprodukte eine stärkere Wasserstoffsättigung aufweisen als entsprechende Pyrolyseprodukte, die unter Einsatz nicht kohlenstoffbasierter, beispielsweise zeolithischer Katalysatoren erhalten werden. Die eingesetzten kohlenstoffbasierten Katalysatoren sind daneben unempfindlich gegenüber Katalysatorgiften und können nach Gebrauch mit technisch eingeführten Methoden reaktiviert werden. Ferner lassen sich die eingesetzten Katalysatoren auch ganz oder teilweise aus dem im Pyrolysereaktor erzeugten Pyrolysekoks herstellen. Schließlich besteht erfindungsgemäß durch den nachgeschalteten Desoxygenierungsreaktor gegenüber der Pyrolyse in Anwesenheit kohlenstoffbasierter Katalysatoren der Vorteil einer besseren Steuerbarkeit des Decarboxylierungsprozesses durch Verwendung eines maßgeschneiderten Decarboxylierungsreaktors und -katalysators.

Die vorliegende Erfindung wird nachfolgend anhand eines Verfahrensfließbildes noch näher erläutert. Figur 1 zeigt eine Ausführungsform des erfindungsgemäßen Verfahrens.

Hierbei wird Biomasse 1 einer Anlage zur Erzeugung von Pyrolyseöl 11, Pyrolysegas 12 und/oder Desoxygenierungskatalysator 2 (bzw. Koks 13 als Vorstufe des Desoxygenierungskatalysators 2) zugeführt. Im Regelfall werden alle drei Bestandteile erzeugt. Die Anlage enthält einen Pyrolysereaktor, einen Desoxygenierungsreaktor, und zwei Einrichtungen zur Phasentrennung. Die Anlagengrenze ist durch eine gestrichelte Linie gekennzeichnet. Zunächst erfolgt die Pyrolyse der Biomasse 1; die Pyrolyseprodukte werden dann einer ersten Phasentrennung unterworfen, zur Trennung der festen Bestandteile, insbesondere Koks 13, von den nicht festen Bestandteilen, dem Pyrolysedampf 10, Der Pyrolysedampf 10 wird dann dem Reaktor zur katalytischen Desoxygenierung zugeführt. Die Produkte des Desoxygenierungsschrittes werden dann in einer zweiten Phasentrennung, bei der insbesondere eine Kondensation der gebildeten Produkte erfolgt, in Pyrolyseöl 11 und Pyrolysegas 12 getrennt. Das Pyrolyseöl umfasst hierbei mehrere Phasen. Neben einer schweren organischen Phase und einer wässrigen Phase ist dies oft noch eine über der wässrigen Phase angeordnete leichte organische Phase. Zur Steuerung der Anteile der gebildeten Phasen und des Grads der Desoxygenierung muss in regelmäßigen Abständen verbrauchter Katalysator 20 gegen frischen Katalysator 2 getauscht werden. Hierfür kann - wie vorstehend erläutert - der nach der ersten Phasentrennung abgetrennte Koks 13 verwendet werden, der allerdings im Regelfall noch einer Aktivierung unterworfen werden muss, insbesondere einer Aktivierung mittels Wasserdampf, CO₂, O₂ oder Luft.

Die Erfindung wird nachfolgend anhand eines Ausführungsbeispiels erläutert.

Die erfindungsgemäße Ausführungsform mit einem Pyrolysereaktor für den Pyrolyseschritt B) und einem Desoxygenierungsreaktor für den Desoxygenierungsschritt C) wird durch Verwendung eines Fetbettreaktors mit einer Aktivkohleschüttung als Desoxygenierungsreaktor, der dem Reaktorausgang eines Schnellpyrolysereaktors nachgeschaltet ist, realisiert. Die Schnellpyrolyse erfolgt angelehnt an das von Bayerbach beschriebene Verfahren der ablativen Flashpyrolyse (R. Bayerbach, Die ablative FlashPyrolyse der PyTec - Erste Erfahrungen und Produkteigenschaften; in: Gülzower Fachgespräche - Band 28: Biocrudeoil; Fachagentur für Nachwachsende Rohstoffe e.V., Gülzow, 2008, S. 87 - 97).

Anmeldungsgemäß wird der von Bayerbach beschriebene Prozess, bestehend aus ablativem Pyrolyse-Reaktor, Zyklon zur Flugkoksabtrennung und Kondensationseinheit (aus Quencheturm und Elektrofilter) derart modifiziert, dass der erfindungsgemäße Desoxygenierungsreaktor zwischen Zyklon und Kondensation eingebaut wird, indem der Austritt des Tauchrohres am Zyklonkopf für die Pyrolysedämpfe mit dem Eintritt des erfindungsgemäßen Reaktors verbunden wird und anschließend der Reaktoraustritt an den Eintritt der Kondensationseinheit angeschlossen wird. Die Reaktordurchströmung kann hierbei beliebig, vorzugsweise jedoch senkrecht von oben nach unten, gewählt werden.

An einer derart ausgebildeten Laboranlage zur ablativen Flashpyrolyse wurde als Referenz brikettiertes Gerstenstroh bei einer Temperatur von 550 °C an der Ablationsscheibe und einem Hydraulikdruck zum Anpressen des Strohs an die Scheibe von 50 bar pyrolysiert.

Hinter dem Zyklon, der wie der Pyrolysereaktor zur Verhinderung von ungewollter Dampfkondensation elektrisch auf 450 °C beheizt war, wurde ein Teilstrom des Dampfes entnommen und in einem Doppeleffektkühler (Mantelkühlung und innenliegender Schlangenkühler) und nachfolgendem Elektrofilter kondensiert. Die flüssigen Produkte wurden in einem Rundkolben aufgefangen. Bei den derart erhaltenen Proben handelt es sich um die nachfolgende Referenz ohne katalytische Nachbehandlung. Die nicht kondensierbaren Bestandteile (Permanentgase) werden abgesaugt und in einer thermischen Nachbrennkammer entsorgt. Eine Untersuchung der gebildeten Pyrolysegase, die unter anderem C1 bis C3-Komponenten enthalten, insbesondere Methan, erfolgt in diesem Beispiel daher nicht.

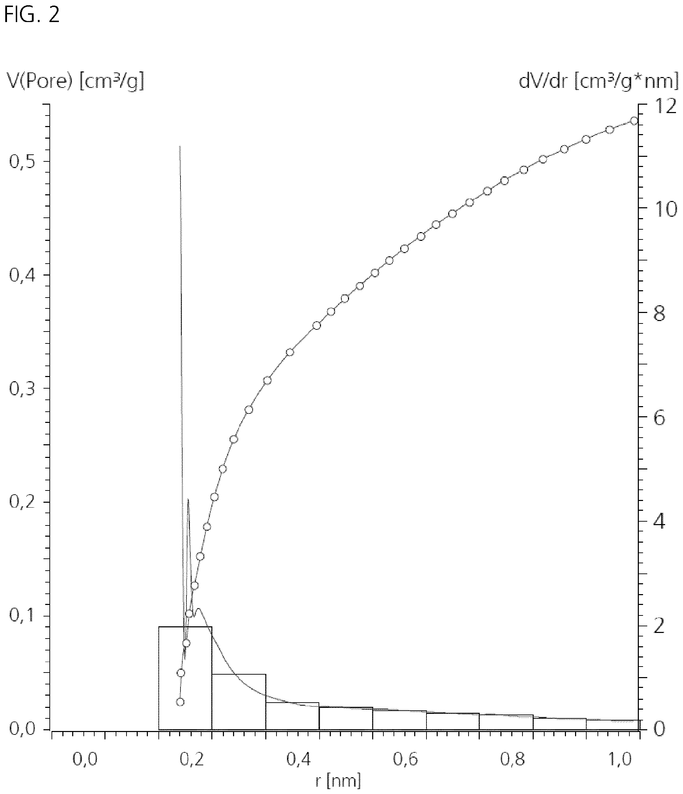

Für das erfindungsgemäße Verfahren wird der vorstehend beschriebene Desoxygenierungsreaktor zwischen dem Probenahmestutzen und dem Doppeleffektkühler installiert. Der Reaktor besteht aus einem Rohrstück DN100 mit einer lichten Weite von 107 mm und wurde von außen mit Hilfe elektrischer Widerstandsheizungen ebenfalls auf 450 °C beheizt, so dass die Desoxygenierung bei 450 °C erfolgt. Eingefüllt wurde als Beispiel eines kohlenstoffhaltigen Katalysators 1 Liter einer wasserdampfaktivierten Formaktivkohle auf Holzkohlebasis mit den nachfolgend in Tabelle 1 angegebenen Kenngrößen, so dass sich eine Schütthöhe von 0,111 m ergibt. Figur 2 zeigt die Porenradienverteilung und die Verteilung der Porenvolumina dieser Formaktivkohle, ermittelt nach der vorstehend angegebenen Methode von Horvath und Kawazoe. Während des weiteren Betriebs der Pyrolyseanlage (weiterhin mit Gerstenstroh und unveränderten Pyrolyseparametern) wurde ein Teilstrom der Pyrolysedämpfe über den Reaktor geleitet und anschließend die kondensierbaren Bestandteile in der beschriebenen Kondensationseinheit für die Probenahme niedergeschlagen und die Kondensate im Rundkolben aufgefangen. Dabei wurde der Volumenstrom im Teilstrombereich der Laboranlage so geregelt, dass sich nach der Kondensationseinheit stets ein Permanentgasvolumenstrom von 1 m³/h einstellte. Der gesamte Prozess erfolgt bei Normaldruck.

Bei der Kondensation der Pyrolysedämpfe tritt im Rundkolben eine spontane Phasenseparation in eine wässrige und eine schwere organische Phase auf, wobei die wässrige Phasen oben schwimmt. Die Behandlung der Pyrolysedämpfe mit dem erfindungsgemäßen Reaktor führt zu einer Veränderung in der Zusammensetzung der Kondensate, die abhängig ist von der Betriebszeit, da sich die Aktivität des kohlenstoffhaltigen Katalysators mit der Zeit verändert. Es entsteht neben den gewünschten Produkten auch Koks, der mit der Zeit die Porenstruktur des Katalysators verändert bzw. zusetzt.

**Tab. 1: Ausgewählte Stoffdaten der Aktivkohle gemäß Beispiel**

| Eigenschaft | Wert | Analytik gemäß |
|---|---|---|
| Partikelgröße [mm] | d=4 mm | |
| Spezifisches kumulatives Porenvolumen (Mesoporen) nach Barrett, Joyner und Halenda [cm³/g] | 0,0804 | DIN 66 134. |
| Spezifische kumulative Oberfläche (Mesoporen) nach Barrett, Joyner und Halenda [m²/g] | 79,97 | DIN 66 134. |
| Spezifisches kumulatives Porenvolumen (Mikroporen) nach Horvath und Kawazoe [cm³/g] | 0,5354 | DIN 66 135-4 |
| Spezifische kumulative Oberfläche (Mikroporen) nach Horvath und Kawazoe [m²/g] | 1 415 | DIN 66 135-4 |
| Spezifisches Mikroporenvolumen nach Dubinin und Raduskevich [cm³/g] | 0,4744 | DIN 66 135-3 |
| Spezifische Oberfläche (Mikroporen) nach Dubinin und Raduskevich / Kaganer [m²/g] | 1 336 | DIN 66 135-3 |
| Porenvolumen (Gurvich) [cm³/g] | 0,6243 | DIN 66134 |
| Spezifische Oberfläche nach Brunauer, Emmett und Teller [m²/g] | 1 254 | DIN 66 131 |
| Jodzahl [mg/g] | >1100 | CEFIC-1986 |
| Schüttdichte [g/l] | 418 | Angelehnt an DIN EN ISO 787-11 |
| Rütteldichte [g/l] | 428 | Angelehnt an DIN EN ISO 787-11 |
| Rollabriebshärte [%] | 99,96 | |
| Ball-Pan-Härte | 97,87 % | ASTM D 3802:2010 |

Hierbei erfolgt die Bestimmung der Oberflächen und der Volumina der Mesoporen und der Mikroporen gemäß L. G. Joyner, et al., J. Am. Chem. So., 1, 1951, 73, 378-380 bzw. gemäß G. Horvath, K. Kawazoe, J. Chem. Eng. Japan, 16, 6(1983), 470-475.

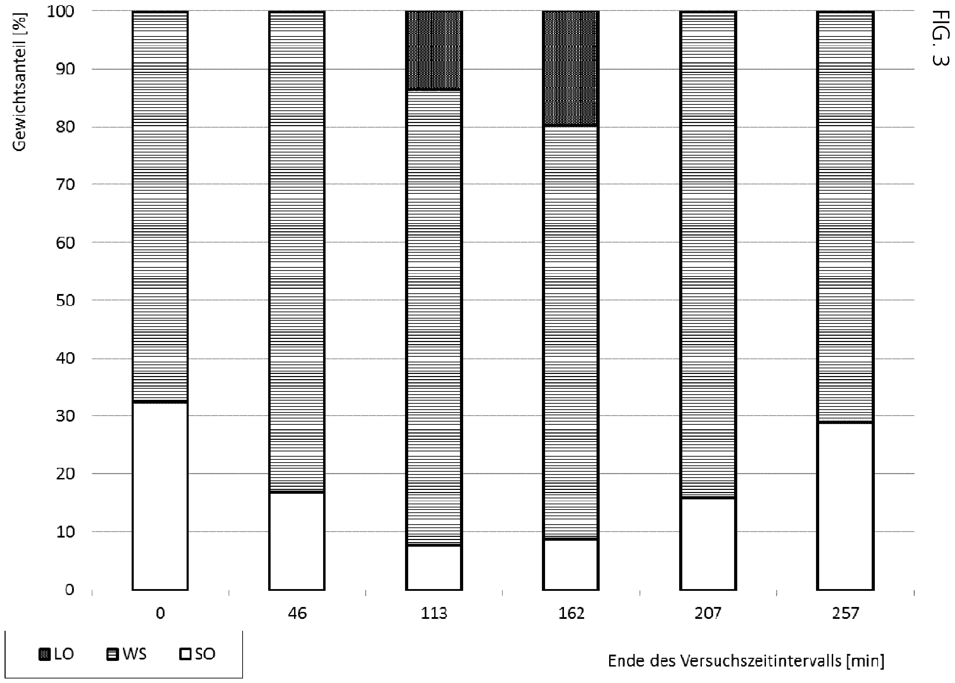

In einem ersten Betriebsintervall S-1 bei einer Betriebszeit von 0-46 min ist die Aktivität des frischen Katalysators sehr hoch und der Anteil der wässrigen Phase nimmt deutlich zu gegenüber der Referenzprobe vom unbehandelten Pyrolysedampf. Bei den Proben aus den Betriebsintervallen von 46 - 113 min (Betriebsintervall S-2) bzw. 113 - 162 min (Betriebsintervall S-3) wird der Katalysator aus Betriebsintervall S-1 bzw. aus Betriebsintervall S-2 eingesetzt; es ist der optimale Katalysatorzustand erreicht. Das wird dadurch angezeigt, dass sich in diesen beiden Zeitintervallen eine dritte, diesmal leichte organische Phase bildet, die auf der wässrigen Phase schwimmt und im Durchschnitt 16,7 % der Gesamtkondensate ausmacht. In den beiden folgenden Betriebsintervallen von 162 -207 min (Betriebsintervall S-4) und 207 -257 min (Betriebsintervall S-5) nimmt die Aktivität des Katalysators weiter ab, eine leichte organische Phase bildet sich nicht mehr. Tabelle 2 und Figur 3 zeigen den Anteil der leichten organische Phase(LO), der wässrigen Phase (WS) und der schweren organischen Phase (SO) am Gesamtgewicht der in den jeweiligen Betriebsintervallen angefallenen Kondensate. Das Versuchszeitintervall 0 Minuten bezeichnet hier und bei den folgenden Figuren die Referenzprobe. Entsprechendes gilt für die vorstehenden Bezeichnungen LO, WS und SO sowie die Bezeichnung Σ, die für die Summe aus allen 3 vorgenannten Phasen steht. Diese Bezeichnungen werden auch in den Tabellen 2 bis 4 verwendet.

**Tab. 2: Gewichtsanteile der auftretenden Phasen am Gesamt-Kondensat**

| Probe | Betriebsintervall [min] | SO [Gew.-%] | WS [Gew.-%] | LO [Gew.-%] |
|---|---|---|---|---|
| Referenz | - | 32,5 | 67,5 | - |
| S-1 | 0-46 | 17,0 | 83,0 | - |
| S-2 | 46-113 | 7,8 | 78,6 | 13,6 |
| S-3 | 113-162 | 8,9 | 71,4 | 19,7 |
| S-4 | 162-207 | 16,0 | 84,0 | - |
| S-5 | 207-257 | 29,1 | 70,9 | - |

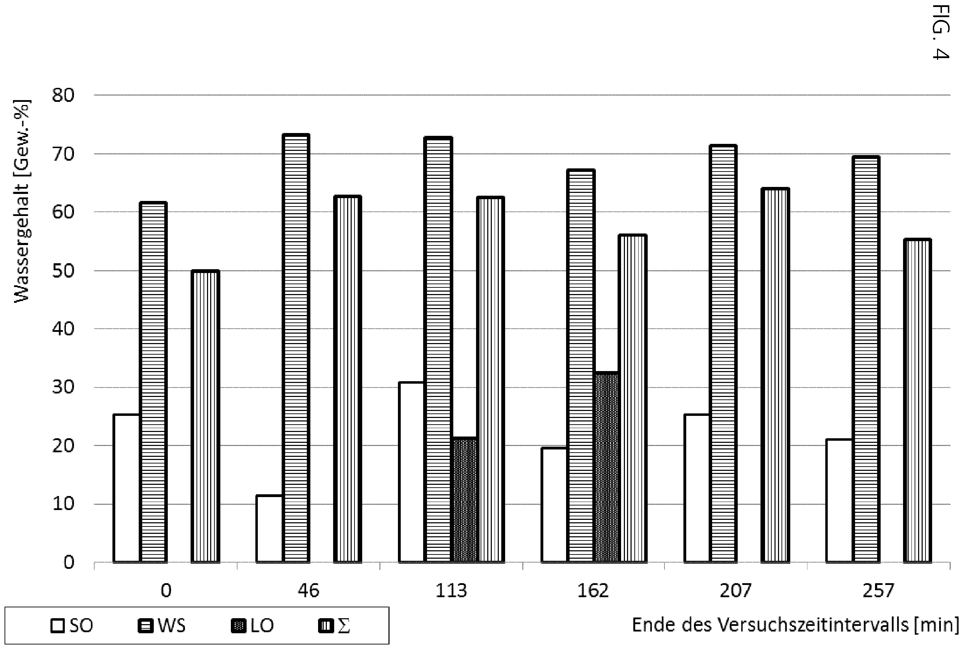

Tabelle 3 und Figur 4 zeigen die Wassergehalte der Phasen aus Tabelle 2 und den berechneten Gesamtwassergehalt der Kondensate eines Betriebsintervalls. Dabei besteht das Wasser zum einem aus der ursprünglich in der Biomasse (hier Gerstenstroh) enthaltenen Feuchte und zum anderen aus Reaktionswasser, das während der Pyrolyse gebildet wird. Bei den Betriebsintervallen S-1 bis S-5 ist zusätzlich Reaktionswasser aus der Desoxygenierung enthalten, weshalb hier der Wassergehalt stets größer als bei der Referenz ist. Tabelle 3 und Figur 4 ist zu entnehmen, dass auch die wässrige Phase WS ca. 25 bis 40 Gew.-% organische Anteile enthält.

**Tab. 3: Wassergehalte der auftretenden Phasen**

| Probe | Betriebsintervall [min] | SO [Gew.-%] | WS [Gew.-%] | LO [Gew.-%] | Σ [Gew.-%] |
|---|---|---|---|---|---|
| Referenz | - | 25,27 | 61,72 | - | 49,87 |
| S-1 | 0-46 | 11,38 | 73,30 | - | 62,77 |
| S-2 | 46-113 | 30,78 | 72,76 | 21,41 | 62,50 |
| S-3 | 113-162 | 19,51 | 67,14 | 32,46 | 56,07 |
| S-4 | 162-207 | 25,32 | 71,40 | - | 64,03 |
| S-5 | 207-257 | 21,03 | 69,49 | - | 55,39 |

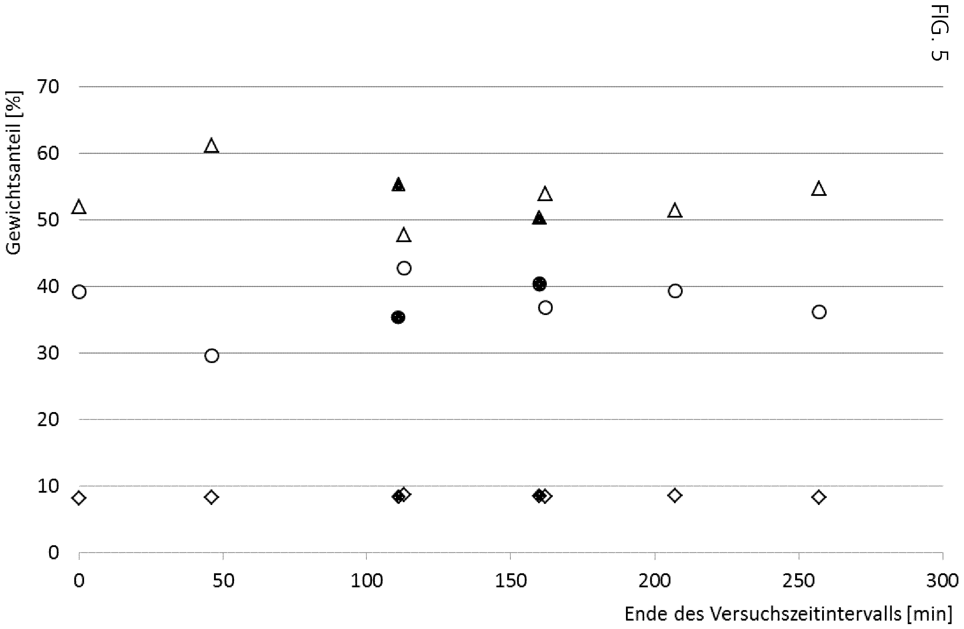

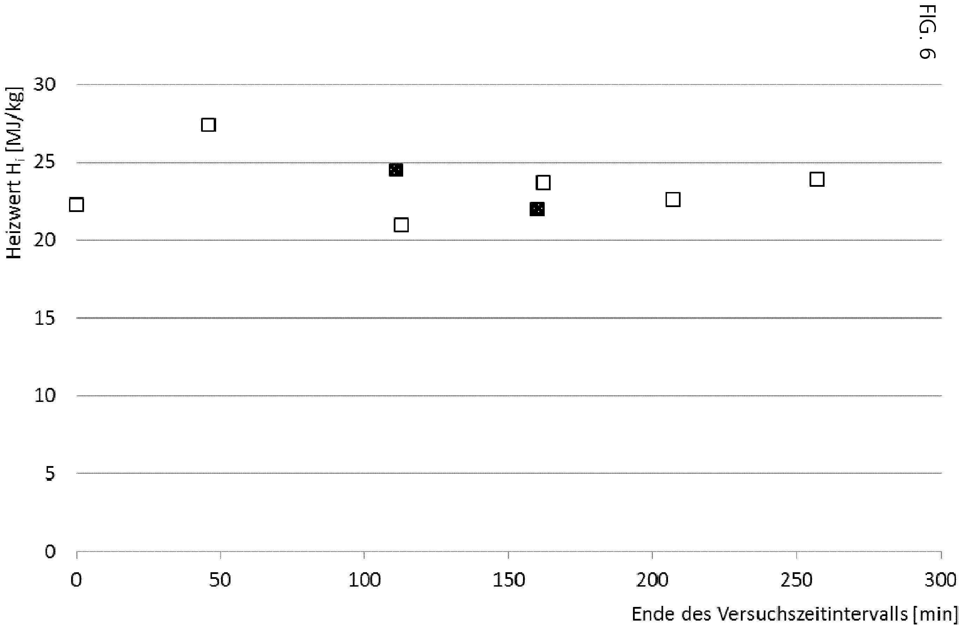

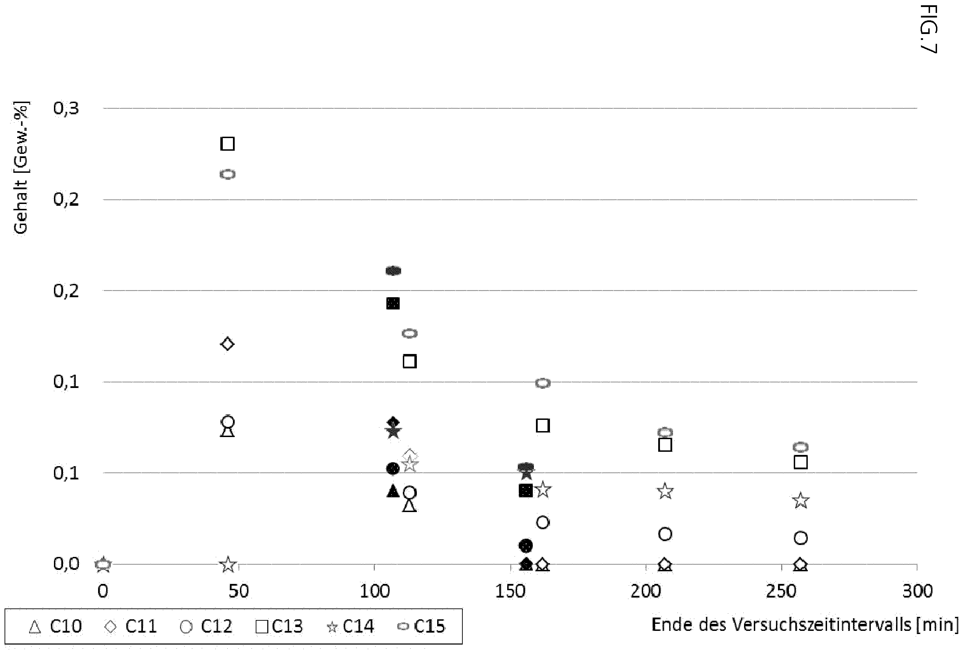

Figur 5 und Tabelle 4 zeigen das Ergebnis der Elementaranalysen zu den Phasen LO und SO für die vorstehenden Proben. Hierbei stehen Kreise für den Sauerstoffgehalt, Rauten für den Wasserstoffgehalt und Dreiecke für den Kohlenstoffgehalt. Die gefüllten Symbole stehen für die leichte organische Phase, die ungefüllten Symbole für die schwere organische Phase (gilt auch in Figur 6 und 7). Man erkennt, dass insbesondere bei frischem Katalysator und bei der leichten organischen Phase eine gute Desoxygenierung erfolgt (Proben S-1 und S-2 LO). Zudem ist in allen Proben der Wasserstoffgehalt deutlich höher als in der Referenzprobe. Der relativ niedrige Sauerstoffgehalt und der erhöhte Wasserstoffgehalt spiegeln sich auch in den in Figur 6 dargestellten Heizwerten dieser Phasen wieder.

Figur 7 und Tabelle 5 zeigen die Gewichtsanteile der n-Alkane in den auftretenden teerartigen oder organischen Phasen. Während in der Referenzprobe ohne katalytische Nachbehandlung keine Alkane detektiert wurden, wurden insbesondere bei der frischen Aktivkohle jeweils bis zu 0,7 Gew.-% (bezogen auf die wasserhaltige Probe) an n-Alkanen mit 10 bis 15 Kohlenstoffatomen gebildet. Dieser Anteil nimmt mit zunehmender Katalysatoralterung wieder ab.

**Tab. 4: Elementaranalysen und Heizwert Hᵢ der auftretenden teerartigen oder organischen Phasen**

| Probe | Betriebsintervall [min] | C [%] | H [%] | O [%] | Hᵢ [MJ/kg] |
|---|---|---|---|---|---|
| Referenz, SO | - | 51,96 | 8,17 | 39,29 | 22,3 |
| S-1,SO | 0-46 | 61,25 | 8,30 | 29,56 | 27,4 |
| S-2, LO | 46-113 | 55,40 | 8,38 | 35,30 | 24,5 |
| S-2, SO | 46-113 | 47,73 | 8,7 | 42,78 | 21,0 |
| S-3, LO | 113-162 | 50,37 | 8,51 | 40,37 | 22,0 |
| S-3, SO | 113-162 | 53,94 | 8,37 | 36,90 | 23,7 |
| S-4, SO | 162-207 | 51,44 | 8,55 | 39,30 | 22,6 |
| S-5, SO | 207-257 | 54,77 | 8,27 | 36,22 | 23,9 |

**Tab. 5: Anteile der n-Alkane in den organischen Phasen in Gew.-%**

| Probe | Betriebsintervall [min] | C10 | C11 | C12 | C13 | C14 | C15 |
|---|---|---|---|---|---|---|---|
| Referenz, SO | - | 0,00 | 0,00 | 0,00 | 0,00 | 0,00 | 0,00 |
| S-1, SO | 0-46 | 0,07 | 0,12 | 0,08 | 0,23 | 0,00 | 0,21 |
| S-2, LO | 46-113 | 0,04 | 0,08 | 0,05 | 0,14 | 0,07 | 0,16 |
| S-2,SO | 46-113 | 0,03 | 0,06 | 0,04 | 0,11 | 0,06 | 0,13 |
| S-3, LO | 113-162 | 0,00 | 0,00 | 0,01 | 0,04 | 0,05 | 0,05 |
| S-3, SO | 113-162 | 0,00 | 0,00 | 0,02 | 0,08 | 0,04 | 0,10 |
| S-4, SO | 162-207 | 0,00 | 0,00 | 0,02 | 0,07 | 0,04 | 0,07 |
| S-5, SO | 207-257 | 0,00 | 0,00 | 0,01 | 0,06 | 0,04 | 0,06 |

## Patentansprüche

1. Verfahren zur Herstellung von Pyrolysegas und/oder Pyrolyseöl mittels eines ersten Reaktors und eines zweiten, davon separierten Reaktors, wobei der erste Reaktor ein Pyrolysereaktor ist und der zweite Reaktor ein Desoxygenierungsreaktor ist aus zumindest teilweise biogenen Ausgangsmaterialien mit folgenden Schritten:
A) Bereitstellung des zumindest teilweise biogenen Ausgangsmaterials, das ausgewählt ist aus lignozellulösen Biomassen und lignozellulösen Reststoffen und eines kohlenstoffbasierten, mesoporösen und/oder mikroporösen Katalysators
B) thermische Behandlung des Ausgangsmaterials im Pyrolysereaktor bei einer Temperatur T₁, so dass zumindest teilweise eine Pyrolyse des Ausgangsmaterials zumindest zu flüssigen, dampfförmigen und/oder gasförmigen Pyrolyseprodukten erfolgt
B2) Phasentrennung, wobei eine Abtrennung der festen Pyrolyseprodukte und der staubförmigen Partikel von den nicht festen Pyrolyseprodukten erfolgt
C) Kontaktierung nur der flüssigen, dampfförmigen und/oder gasförmigen Pyrolyseprodukte mit dem kohlenstoffbasierten Katalysator im Desoxygenierungsreaktor bei einer Temperatur T₂ zwischen 350 und 500 °C, mit der Maßgabe, dass T₁ > T₂, wobei die Differenz zwischen den Temperaturen T₁ und T₂ zumindest 10 °C beträgt, so dass eine Desoxygenierung der flüssigen, dampfförmigen und/oder gasförmigen Pyrolyseprodukte zu zumindest teilweise desoxygenierten flüssigen, dampfförmigen und/oder gasförmigen Pyrolyseprodukten erfolgt
D) Auffangen der desoxygenierten Pyrolyseprodukte in einer Separiereinrichtung, in der eine Produktauftrennung erfolgt.

2. Verfahren nach einem der vorhergehenden Ansprüche,
**dadurch gekennzeichnet, dass** der Katalysator ausgewählt ist aus Aktivkohle, Aktivkoks, Carbon Nanotubes, Kohlenstoffmolekularsieben und Gemischen der genannten Stoffe.

3. Verfahren nach einem der vorhergehenden Ansprüche,
**dadurch gekennzeichnet, dass**
Schritt C) bei einer Temperatur T₂ zwischen 420 und 480 °C und insbesondere zwischen 450 und 470 °C durchgeführt wird.

4. Verfahren nach einem der vorhergehenden Ansprüche,
**dadurch gekennzeichnet, dass**
Schritt B) bei einer Temperatur T₁ zwischen 450 und 600 °C, vorzugsweise zwischen 500 und 550 °C durchgeführt wird.

5. Verfahren nach einem der vorhergehenden Ansprüche,
**dadurch gekennzeichnet, dass**
die Differenz zwischen den Temperaturen T₁ und T₂ in den Verfahrensschritten B) und C) zumindest 20° C und insbesondere zumindest 30 °C beträgt.

6. Verfahren nach einem der vorhergehenden Ansprüche,
**dadurch gekennzeichnet, dass**
als Katalysator ein Pyrolysekoks bereitgestellt wird, der in dem Verfahren gemäß Anspruch 1 erhalten wird oder aus diesem Verfahrensprodukt durch eine Aktivierung gewonnen werden kann .

7. Verfahren nach einem der vorhergehenden Ansprüche,
**dadurch gekennzeichnet, dass**
der Katalysator eine spezifische kumulative Oberfläche der Mikroporen nach Horvath und Kawazoe und DIN 66 135-4 von zumindest 1000 m²/g und insbesondere zumindest 1300 m²/g aufweist.

8. Verfahren nach einem der vorhergehenden Ansprüche,
**dadurch gekennzeichnet, dass**
der Katalysator in Schritt C) ausgetauscht wird, sobald das Mikroporenvolumen gegenüber dem frischen Katalysator um 75% und insbesondere um 50 % abgenommen hat.

9. Verfahren nach einem der Ansprüche 1 bis 8,
**dadurch gekennzeichnet, dass**
der Katalysator in Schritt C) ausgetauscht wird, sobald eine organische Pyrolysephase gebildet wird, die sich über einer gebildeten wässrigen Phase als leichte organische Phase absetzt.

10. Verfahren nach einem der Ansprüche 1 bis 8,
**dadurch gekennzeichnet, dass**
der Katalysator in Schritt C) ausgetauscht wird, sobald keine Bildung einer organischen Pyrolysephase beobachtet wird, die sich über einer gebildeten wässrigen Phase als leichte organische Phase absetzt.

## Claims

1. Process for producing pyrolysis gas and/or pyrolysis oil by means of a first reactor and a second reactor separate therefrom, wherein the first reactor is a pyrolysis reactor and the second reactor is a deoxygenation reactor, from at least partially biogenic starting materials comprising the steps of:
A) providing the at least partially biogenic starting material selected from lignocellulosic biomasses and lignocellulosic waste materials and a carbon-based, mesoporous and/or microporous catalyst
B) thermal treatment of the starting material in the pyrolysis reactor at a temperature T₁ to effect at least partial pyrolysis of the starting material to afford at least liquid, vaporous and/or gaseous pyrolysis products
B2) phase separation to effect removal of the solid pyrolysis products and the dust-like particles from the non-solid pyrolysis products
C) contacting only the liquid, vaporous and/or gaseous pyrolysis products with the carbon-based catalyst in the deoxygenation reactor at a temperature T₂ between 350°C and 500°C with the proviso that T₁ > T₂, wherein the difference between the temperatures T₁ and T₂ is at least 10°C, to effect a deoxygenation of the liquid, vaporous and/or gaseous pyrolysis products to afford at least partially deoxygenated liquid, vaporous and/or gaseous pyrolysis products
D) collecting the deoxygenated pyrolysis products in a separation apparatus in which a product separation is effected.

2. Process according to any of the preceding claims, **characterized in that** the catalyst is selected from activated carbon, activated coke, carbon nanotubes, carbon molecular sieves and mixtures of the recited substances.

3. Process according to either of the preceding claims, **characterized in that** step C) is performed at a temperature T₂ between 420°C and 480°C and in particular between 450°C and 470°C.

4. Process according to any of the preceding claims, **characterized in that** step B) is performed at a temperature T₁ between 450°C and 600°C, preferably between 500°C and 550°C.

5. Process according to any of the preceding claims, **characterized in that** the difference between the temperatures T₁ and T₂ in the process steps B) and C) is at least 20°C and in particular at least 30°C.

6. Process according to any of the preceding claims, **characterized in that** the catalyst provided is a pyrolysis coke which is obtained in the process according to Claim 1 or is obtainable from this product of the process by an activation.

7. Process according to any of the preceding claims, **characterized in that** the catalyst has a specific cumulative surface area of micropores according to Horvath and Kawazoe and DIN 66 135-4 of at least 1000 m²/g and in particular at least 1300 m²/g.

8. Process according to any of the preceding claims, **characterized in that** the catalyst in step C) is replaced as soon as the micropore volume has fallen by 75% and in particular by 50% compared to the fresh catalyst.

9. Process according to any of Claims 1 to 8, **characterized in that** the catalyst in step C) is replaced as soon as an organic pyrolysis phase deposited as a light organic phase above a formed aqueous phase is formed.

10. Process according to any of Claims 1 to 8, **characterized in that** the catalyst in step C) is replaced as soon as no formation of an organic pyrolysis phase deposited as a light organic phase above a formed aqueous phase is observed.

## Revendications

1. Procédé de fabrication d'un gaz de pyrolyse et/ou d'une huile de pyrolyse au moyen d'un premier réacteur et d'un deuxième réacteur séparé de celui-ci, le premier réacteur étant un réacteur de pyrolyse et le deuxième réacteur étant un réacteur de désoxygénation, à partir de matériaux de départ au moins partiellement biogènes, comprenant les étapes suivantes :
A) la fourniture du matériau de départ au moins partiellement biogène, qui est choisi parmi les biomasses lignocellulosiques et les matériaux résiduaires lignocellulosiques, et d'un catalyseur à base de carbone, mésoporeux et/ou microporeux,
B) le traitement thermique du matériau de départ dans le réacteur de pyrolyse à une température T₁, de telle sorte qu'une pyrolyse du matériau de départ pour former au moins des produits de pyrolyse liquides, sous la forme de vapeur et/ou gazeux ait lieu au moins en partie,
B2) la séparation des phases, une séparation des produits de pyrolyse solides et des particules sous forme de poussière des produits de pyrolyse non solides ayant lieu,
C) la mise en contact d'uniquement les produits de pyrolyse liquides, sous la forme de vapeur et/ou gazeux avec le catalyseur à base de carbone dans le réacteur de désoxygénation à une température T₂ comprise entre 350 et 500 °C, à condition que T₁ > T₂, la différence entre les températures T₁ et T₂ étant d'au moins 10 °C, de telle sorte qu'une désoxygénation des produits de pyrolyse liquides, sous la forme de vapeur et/ou gazeux ait lieu pour former des produits de pyrolyse liquides, sous la forme de vapeur et/ou gazeux au moins partiellement désoxygénés,
D) la collecte des produits de pyrolyse désoxygénés dans un dispositif de séparation, dans lequel une séparation des produits a lieu.

2. Procédé selon l'une quelconque des revendications précédentes, **caractérisé en ce que** le catalyseur est choisi parmi le charbon actif, le coke actif, les nanotubes de carbone, les tamis moléculaires carbonés et les mélanges des matières indiquées.

3. Procédé selon l'une quelconque des revendications précédentes, **caractérisé en ce que** l'étape C) est réalisée à une température T₂ comprise entre 420 et 480 °C, et notamment entre 450 et 470 °C.

4. Procédé selon l'une quelconque des revendications précédentes, **caractérisé en ce que** l'étape B) est réalisée à une température T₁ comprise entre 450 et 600 °C, de préférence entre 500 et 550 °C.

5. Procédé selon l'une quelconque des revendications précédentes, **caractérisé en ce que** la différence entre les températures T₁ et T₂ dans les étapes de procédé B) et C) est d'au moins 20 °C et notamment d'au moins 30 °C.

6. Procédé selon l'une quelconque des revendications précédentes, **caractérisé en ce qu'**un coke de pyrolyse est fourni en tant que catalyseur, qui est obtenu dans le procédé selon la revendication 1 ou peut être obtenu à partir de ce produit de procédé par une activation.

7. Procédé selon l'une quelconque des revendications précédentes, **caractérisé en ce que** le catalyseur présente une surface spécifique cumulée des micropores selon Horvath et Kawazoe et DIN 66 135-4 d'au moins 1 000 m²/g et notamment d'au moins 1 300 m²/g.

8. Procédé selon l'une quelconque des revendications précédentes, **caractérisé en ce que** le catalyseur à l'étape C) est remplacé dès que le volume de micropores a diminué de 75 %, et notamment de 50 %, par rapport au catalyseur frais.

9. Procédé selon l'une quelconque des revendications 1 à 8, **caractérisé en ce que** le catalyseur à l'étape C) est remplacé dès qu'une phase de pyrolyse organique qui se dépose au-dessus d'une phase aqueuse formée en tant que phase organique légère se forme.

10. Procédé selon l'une quelconque des revendications 1 à 8, **caractérisé en ce que** le catalyseur à l'étape C) est remplacé dès qu'aucune formation d'une phase de pyrolyse organique qui se dépose au-dessus d'une phase aqueuse formée en tant que phase organique légère n'est observée.
